# EUROPEAN PATENT APPLICATION

(11) **EP 1 055 898 A2**
(43) Date of publication of application: **29.11.2000**
(21) Application number: 00110962.8
(22) Date of filing: 26.05.2000
(51) Int. Cl.: F28F 21/08, F28F 19/06, F28D 1/03, F28F 1/12

(54) **Heat exchanger made of aluminium alloy**

(30) Priority: 28.05.1999 JP 14924299; 13.01.2000 JP 2000009956
(71) Applicant: Denso Corporation, Kariya-city, Aichi-pref., 448-8661 (JP)
(72) Inventor: Torigoe, Eiichi, Denso Corporation, Kariya-city, Aichi-pref. 448-8661 (JP); Hirao, Koji, Denso Corporation, Kariya-city, Aichi-pref. 448-8661 (JP); Makihara, Masamichi, Denso Corporation, Kariya-city, Aichi-pref. 448-8661 (JP); Nagasawa, Toshiya, Denso Corporation, Kariya-city, Aichi-pref. 448-8661 (JP)
(74) Representative: Klingseisen, Franz, Dipl.-Ing.

(57) **Abstract**

A manufacturing method for an evaporator (1) made of aluminum alloy. First, a three-layer aluminum alloy plate having a core (21) made of Al-Mn alloy, a sacrifice anode layer (22) made of aluminum alloy which is electro-chemically base with respect to the core (21) and clad on one side of the core (21), and a brazing layer (23) made of Al-Si alloy and clad on the other side of the core (21) is uniformly rolled to be work-hardened. Next, the thin work-hardened aluminum alloy plate (20) is bent to form a tube (2) so that the sacrifice anode layer (22) is disposed outside the tube (2) to face air and the brazing layer (23) is disposed inside the tube (2) to face refrigerant. Then, plural tubes (2) and outer fins (4) are alternately laminated and are integrally brazed to tanks (5-7) to form the evaporator (1). As a result, a thickness of the tube (2) is reduced without deteriorating corrosion resistance of the tube (2), thereby decreasing a weight and a size of the evaporator (1).

## Description

### BACKGROUND OF THE INVENTION

### 1. Field of the Invention:

The present invention relates generally to heat exchangers, and particularly to a heat exchanger made of aluminum alloy and integrally formed by brazing. The present invention is suitably applied to an evaporator, a condenser and a supercooler for an air conditioner and an oil cooler for an engine cooler.

### 2. Related Art:

Conventionally, an evaporator for a refrigeration cycle of a vehicle air conditioner has plural core plates made of aluminum alloy. Each of the core plates has a fluid passage and a tank portion and is integrally formed by drawing a three-layer aluminum alloy plate. As shown in FIG. 15, the three-layer aluminum alloy plate has a core 101 made of aluminum-manganese (Al-Mn) alloy and brazing layers 102, 103 made of aluminum-silicon (Al-Si) alloy and uniformly clad on one side and the other side of the core 101, respectively. A whole thickness of the three-layer aluminum alloy plate is 0.6 mm while each thickness of the brazing layers 102, 103 is 90 µm. The plural core plates and plural corrugated outer fins are alternately laminated and integrally brazed to form the evaporator.

Recently, improvement of fuel efficiency of a vehicle is demanded due to environmental concerns. Fuel efficiency of the vehicle is improved by reducing a size and a weight of parts of the vehicle such as the evaporator. The size and the weight of the evaporator are effectively reduced by decreasing a thickness of each of the core plates of the evaporator. However, when a thickness of the core plate is excessively reduced, the core plate may crack during the drawing process. Therefore, it is difficult to reduce the size and the weight of the evaporator by reducing a thickness of the core plate.

Further, an outer surface of the core plate facing air passing through the evaporator does not have sufficient pitting corrosion resistance. Therefore, the outer fins made of aluminum alloy which is electro-chemically base with respect to the core plate are disposed on the outer surface of the core plate so that the outer fins become sacrifice anodes and protect the outer surface of the core plate from corrosion. However, the outer surface of the core plate has a relatively low conductivity and allows condensed water to adhere thereto. Therefore, the outer fins may protect only a limited area of the core plate around the outer fins, and a whole area of an outer surface of the evaporator may not be sufficiently protected from corrosion.

Further, after the evaporator is integrally brazed, residual brazing material remains on the outer surface of the evaporator. Since the residual brazing material has a relatively non-uniform composition of Si and Al, a relatively large potential difference is produced between Si and Al. As a result, only an Al portion of the core plate may corrode in an early stage so that corrosion of the core plate proceeds from the corroding Al portion in a direction of a thickness of the core plate. Therefore, the thickness of the core plate can not be sufficiently reduced.

Moreover, when the core plate, which is an Al-Mn alloy plate, is drawn, the brazing layers 102, 103 erode significantly at a low-distortion portion of the core plate which has a low distortion rate such as 10 % or less. As a result, the core 101 is eroded and a thickness of the core 101 is reduced at the low-distortion portion, thereby decreasing a life of corrosion resistance of the core plate. When the core plate is work-hardened, erosion of the core 101 is effectively restricted. However, when the core plate is work-hardened, the core plate may not have a sufficient ductility for the drawing process in which the fluid passage and the tank portion are formed.

The core plate may have a sufficient corrosion resistance by an appropriate surface treatment. However, in this case, manufacturing cost of the evaporator may be increased.

### SUMMARY OF THE INVENTION

In view of the foregoing problems, it is an object of the present invention to provide a heat exchanger made of aluminum alloy and reduced in weight while having an excellent corrosion resistance and a low manufacturing cost.

According to the present invention, a heat exchanger integrally brazed is manufactured as follows. First, a plurality of three-layer aluminum alloy plates are uniformly work-hardened to form a plurality of work-hardened plates. Each of the three-layer aluminum alloy plates has a core made of a first aluminum alloy including manganese, a sacrifice anode layer clad on one side of the core and made of a second aluminum alloy which is electro-chemically base with respect to the first aluminum alloy, and a brazing layer clad on the other side of the core and made of a brazing third aluminum alloy. Next, a fluid passage and a tank portion are formed on each of the plurality of work-hardened plates by drawing so that the sacrifice anode layer is disposed to face a corrosive fluid and the brazing layer is disposed to face a non-corrosive fluid. Then, the plurality of work-hardened plates are laminated to form the heat exchanger.

Since the three-layer aluminum alloy plate is uniformly work-hardened, the brazing layer is restricted from eroding, thereby restricting the core from eroding. Further, a surface of the work-hardened plate facing the corrosive fluid is protected from corrosion by the sacrifice anode layer. Also, since the brazing layer is disposed to face the non-corrosive fluid, corrosion resistance of an outer surface of the heat exchanger is improved. As a result, each of the plates forming the heat exchanger can be reduced in thickness while having a sufficient corrosion resistance, thereby reducing a weight and a size of the heat exchanger without increasing a manufacturing cost. Furthermore, since the heat exchanger is formed by laminating only the work-hardened plates without any outer fins, the fluid passage and the tank portion can be formed by shallow-drawing on each of the work-hardened plates. Therefore, each of the work-hardened plates is restricted from having a crack.

Instead of forming the fluid passage and the tank portion on each of the work-hardened plates by drawing, each of the work-hardened plate may be formed into a tube by bending so that the sacrifice anode layer is disposed to face the corrosive fluid and the brazing layer is disposed to face the non-corrosive fluid.

### BRIEF DESCRIPTION OF THE DRAWINGS

This and other objects and features of the present invention will become more readily apparent from a better understanding of the preferred embodiments described below with reference to the accompanying drawings, in which:
FIG. 1 is a schematic perspective view showing an evaporator according to a first preferred embodiment of the present invention;
FIG. 2 is a schematic partial perspective view showing the evaporator according to the first embodiment;
FIG. 3A is a partial sectional view showing a work-hardened aluminum alloy plate according to the first embodiment;
FIG. 3B is a partial perspective view showing a tube of the evaporator according to the first embodiment;
FIG. 4 is a perspective view showing a joint portion between the tube and an outer fin of the evaporator according to the first embodiment;
FIG. 5 is a graph showing a relationship between time and a maximum corrosion depth of a work-hardened aluminum alloy plate of sample evaporators "a", "b" and "c";
FIG. 6 is a perspective view showing a joint portion between a tube and an outer fin of an evaporator according to a second preferred embodiment of the present invention;
FIG. 7 is a perspective view showing a joint portion of a tube, an outer fin and an inner fin of an evaporator according to a third preferred embodiment of the present invention;
FIG. 8 is a perspective view showing a joint portion of a tube, an outer fin and an inner fin of an evaporator according to a fourth preferred embodiment of the present invention;
FIG. 9A is a partial sectional view showing a work-hardened aluminum alloy plate according to a fifth preferred embodiment of the present invention;
FIG. 9B is a partial perspective view showing a tube of an evaporator according to the fifth embodiment;
FIG. 10 is a perspective view showing a joint portion between the tube and an outer fin of the evaporator according to the fifth embodiment;
FIG. 11 is a perspective view showing a joint portion between a tube and an outer fin of an evaporator according to a sixth preferred embodiment of the present invention;
FIG. 12 is a perspective view showing a joint portion of a tube, an outer fin and an inner fin of an evaporator according to a seventh preferred embodiment of the present invention;
FIG. 13 is a perspective view showing a joint portion of a tube, an outer fin and an inner fin of an evaporator according to an eighth preferred embodiment of the present invention;
FIG. 14 is an exploded perspective view showing an evaporator according to a ninth preferred embodiment of the present invention; and
FIG. 15 is a partial sectional view showing a conventional three-layer aluminum alloy plate used for forming an evaporator.

### DETAILED DESCRIPTION OF THE PREFERRED EMBODIMENTS

Preferred embodiments of the present invention are described hereinafter with reference to the accompanying drawings.

### (First Embodiment)

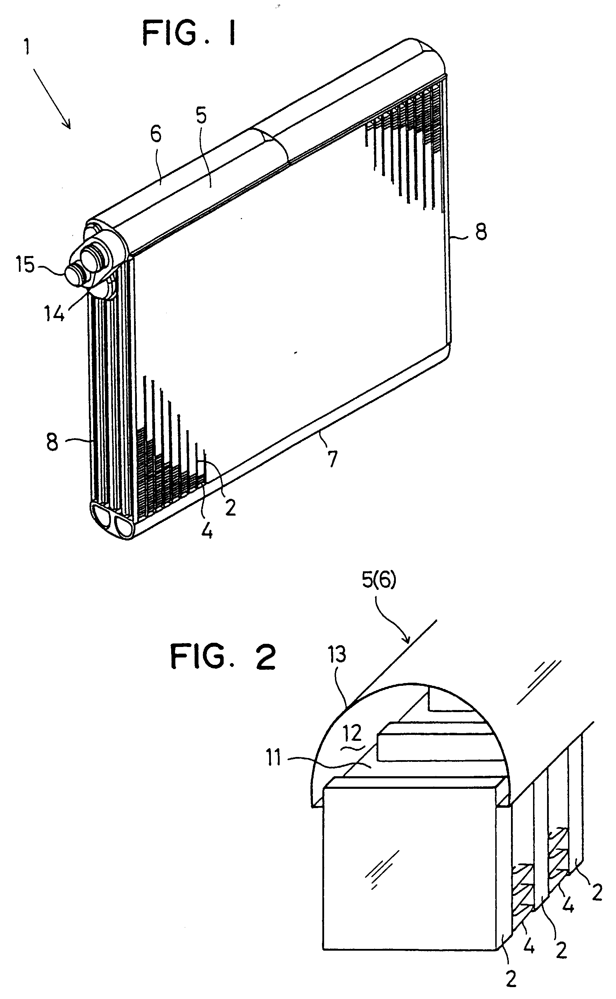

A first preferred embodiment of the present invention will be described with reference to FIGS. 1-5. As shown in FIG. 1, an evaporator 1 for a refrigeration cycle of a vehicle air conditioner has plural tubes 2 each having a refrigerant passage 3 therein. The evaporator 1 performs heat exchange between refrigerant (i.e., non-corrosive fluid) flowing through each of the refrigerant passages 3 and air (i.e., corrosive fluid) passing through the evaporator 1.

The evaporator 1 has a first core portion, a second core portion disposed at an upstream or downstream air side of the first core portion with respect to a direction of air flow, an inlet tank 5, an outlet tank 6, an intermediate tank 7 and a pair of side plates 8 for holding the first and second core portions. The inlet tank 5 is connected to one end (i.e., upper end in FIG. 1) of the first core portion, and an outlet tank 6 is connected to one end (i.e., upper end in FIG. 1) of the second core portion. The intermediate tank 7 is connected to the other ends (i.e., lower ends in FIG. 1) of the first and second core portions.

As shown in FIG. 2, each of the inlet and outlet tanks 5, 6 is made of a flat base plate 11 and a tank portion 13 having a U-shaped cross section. One end of each of the tubes 2 is inserted into the base plate 11. The base plate 11 and the tank plate 13 are connected to form a tank space 12 therebetween. The intermediate tank 7 is also made of a flat base plate (not shown) into which the other end of each of the tubes 2 is inserted, and a tank portion (not shown) having a U-shaped cross section. Thus, the inlet tank 5, the outlet tank 6 and the intermediate tank 7 are formed separately from the tubes 2. Referring back to FIG. 1, one of the side plates 8 has an inlet pipe 14 through which refrigerant from an expansion valve (not shown) is introduced to the first core portion, and an outlet pipe 15 through which refrigerant in the second core portion is discharged to a compressor (not shown).

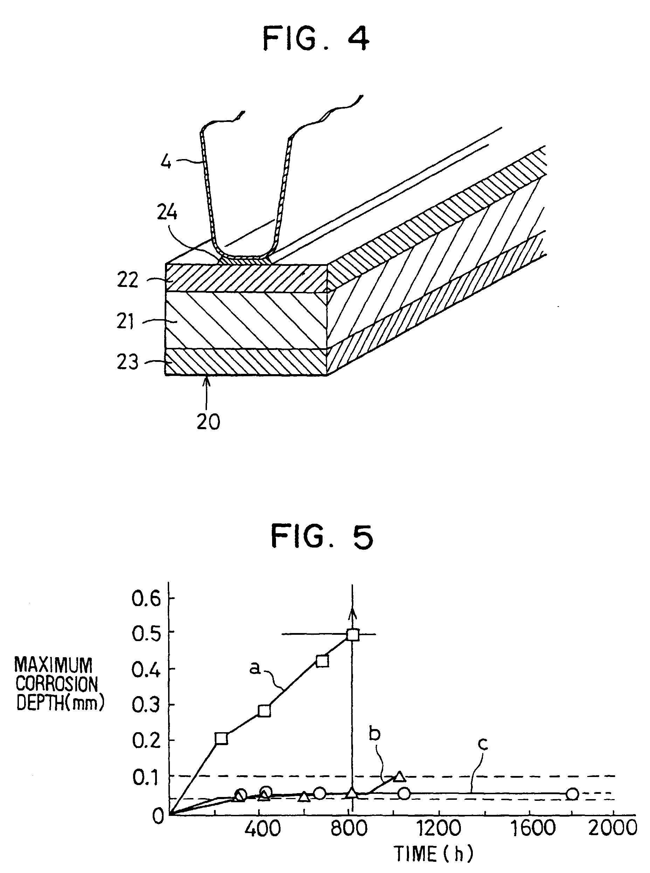

As shown in FIGS. 1 and 2, each of the first and second core portions is formed by alternately laminating the plural tubes 2 and plural outer fins 4. The outer fins 4 are used for improving efficiency of heat transfer between refrigerant and air. Each of the outer fins 4 is corrugated and has plural parallel folds. As shown in FIG. 4, each fold of each of the outer fins 4 is formed to have a flat top so that a joint area between each of the outer fins 4 and each of the tubes 2 is increased. Preferably, each of the outer fins 4 is made of an aluminum alloy which is electro-chemically base with respect to a core 21 and a sacrifice anode layer 22 of each of the tubes 2 and is different from a material of the core 21. For example, each of the outer fins 4 is made of aluminum alloy corresponding to "3003(Japanese Industrial Standard No.) + Zn". "3003" corresponds to an aluminum alloy consisting of 1.2 % Mn, 0.15 % copper (Cu) by weight and impurity. "3003 + Zn" consists of "3003" added with 2.5 % zinc (Zn) by weight.

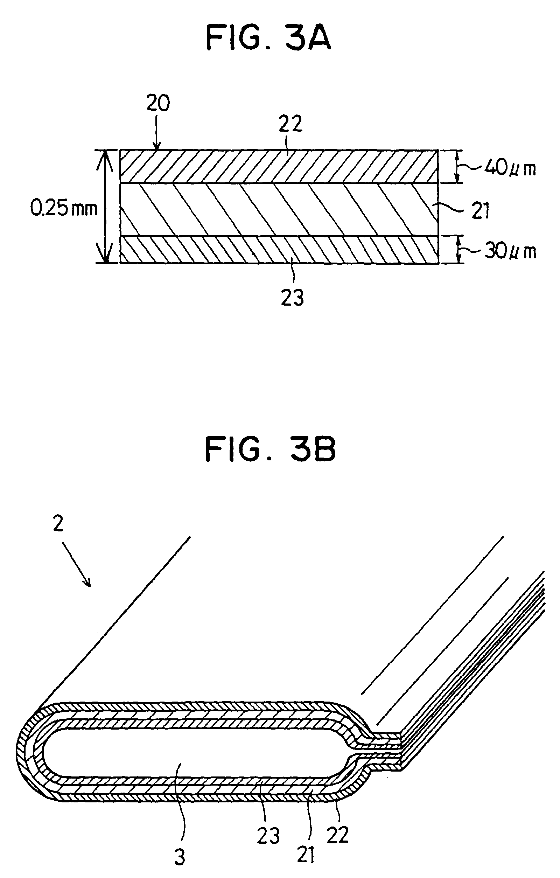

Referring to FIG. 3A, a work-hardened aluminum alloy plate 20 is formed by uniformly rolling a three-layer aluminum alloy plate. The three-layer aluminum alloy plate is made of the core 21, the sacrifice anode layer 22 clad on one side surface of the core 21 and a brazing layer 23 clad on the other side surface of the core 21. As shown in FIG. 3B, each of the tubes 2 is formed by bending the work-hardened aluminum alloy plate 20. Preferably, the core 21 is made of Al-Mn alloy corresponding to "3103" or "3003". "3103" corresponds to an aluminum alloy consisting of 1.3 % Mn, 0.5 % Si, 0.5 % Cu by weight and impurity. "3003" corresponds to an aluminum alloy consisting of 1.0 % Mn, 0.6 % Si, 0.7 % iron (Fe), 0.1 % Cu, 0.1 % Zn by weight and impurity. The sacrifice anode layer 22 is made of Al-Zn alloy which is electro-chemically base with respect to the core 21 and corresponds to "7072". "7072" corresponds to an aluminum alloy consisting of 1.5 % Zn by weight and impurity. The brazing layer 23 is made of Al-Si alloy corresponding to "4045". "4045" corresponds to an aluminum alloy consisting of 10 % Si by weight and impurity.

Next, a manufacturing method of the evaporator 1 will be described with reference to FIGS. 1-4.

First, the work-hardened aluminum alloy plate 20 is formed by uniformly rolling the three-layer aluminum alloy plate having the core 21, the sacrifice anode layer 22 and the brazing layer 23. Conventionally, a work-hardened aluminum alloy plate is refined by annealing to have a distortion rate of 0 %, that is, to have no distortion. In the first embodiment, the work-hardened aluminum alloy plate 20 needs to be refined to have a distortion rate of 10 % or more, theoretically. However, the work-hardened aluminum alloy plate 20 needs to be softened by slight heat treatment to assure a sufficient processability. Therefore, in the first embodiment, the three-layer aluminum alloy plate is cold rolled at a rolling rate of approximately 70 % during a work-hardening process, and then the work-hardened aluminum alloy plate 20 is refined to have a distortion rate of 10-20 % by a heat treatment.

In the first embodiment, as shown in FIG. 3A, a thickness of the work-hardened aluminum alloy plate 20 is 0.25 mm while a thickness of the three-layer aluminum alloy plate is 0.8 mm. A thickness of the sacrifice anode layer 22 is 40 µm and a thickness of the brazing layer 23 is 30 µm. As a result, the whole thickness of the work-hardened aluminum alloy plate 20 is largely reduced in comparison with a conventional not-work-hardened one, thereby reducing a thickness of each of the tubes 2.

Next, the work-hardened aluminum alloy plate 20 is set in a pressing device and is cut into a predetermined shape. Then, as shown in FIG. 3B, the work-hardened aluminum alloy plate 20 is formed into each of the tubes 2 by bending so that the sacrifice anode layer 22 is disposed on an outer surface of each of the tubes 2 to face air and the brazing layer 23 is disposed on an inner surface of each of the tubes 2 to face refrigerant. Further, as shown in FIG. 4, a brazing member 24 made of the same material as the brazing layer 23 is applied to the outer surface of each of the tubes 2 in a straight line so that each fold of each of the outer fins 4 is brazed to the outer surface of each of the tubes 2 through the brazing member 24.

Thereafter, the tubes 2 and the outer fins 4 are alternately laminated to form the first and second core portions. As shown in FIG. 1, one end of each of the tubes 2 of the first core portion is inserted into the inlet tank 5, and one end of each of the tubes 2 of the second core portion is inserted into the outlet tank 6. Other end of each of the tubes 2 of the first and second core portions is inserted into the intermediate tank 7. Then, the first and second core portions are integrally held by the side plates 8 to form an assembled body of the evaporator 1. Flux powder is applied to an outer surface of the assembled body so that the brazing layer 23 is uniformly wet, and then the assembled body is integrally brazed in a furnace. As a result, the evaporator 1 is formed.

Conventionally, when a distortion rate of the Al-Mn alloy plate is low as 10 % or less, a brazing layer of the Al-Mn alloy plate erodes significantly, thereby decreasing a thickness of a core of the Al-Mn alloy plate. According to the first embodiment, the work-hardened aluminum alloy plate 20 having a distortion rate of 10-20 % is used to form the tubes 2 of the evaporator 1. As a result, the brazing layer 23 is restricted from eroding, thereby restricting erosion of the core 21. Therefore, a thickness of the core 21 is restricted from decreasing, and a life of corrosion resistance of each of the tubes 2 is increased. Further, the inlet tank 5, the outlet tank 6 and the intermediate tank 7 are formed separately from the tubes 2. Therefore, each of the tubes 2 is formed only by bending the work-hardened aluminum alloy plate 20 without any drawing process. As a result, the work-hardened aluminum alloy plate 20 is restricted from cracking.

Moreover, each of the tubes 2 is formed so that the sacrifice anode layer 22 is exposed outside each of the tubes 2 to face air. As a result, the outer surface of each of the tubes 2 is sufficiently protected from corrosion by the sacrifice anode layer 22, and a whole area of the evaporator 1 is effectively protected from corrosion. Further, since the brazing layer 23 is disposed inside each of the tubes 2 to face refrigerant and is not exposed outside the each of the tubes 2 to face air, each of the tubes 2 is effectively restricted from corrosion.

Thus, in the first embodiment, while securing a sufficient corrosion resistance of the evaporator 1, a thickness of each of the tubes 2 is reduced, thereby reducing an amount of a material required to form the evaporator 1. As a result, the evaporator 1 is reduced in a size and a weight without deteriorating a cooling performance thereof nor increasing a manufacturing cost thereof. Therefore, fuel efficiency of the vehicle is improved.

Next, results of a corrosion test for sample evaporators "a", "b" and "c" will be described with reference to FIG. 5. The sample evaporator "a" has plural tubes made of an aluminum alloy plate with a thickness of 0.5 mm. The sample evaporator "b" has plural tubes made of the work-hardened aluminum alloy plate 20 with a thickness of 0.10 mm, which includes the sacrifice anode layer 22 having a thickness of 40 µm. The sample evaporator "c" corresponds to the evaporator 1 according to the first embodiment and has plural tubes made of the work-hardened aluminum alloy plate 20 with a thickness of 0.25 mm, which includes the sacrifice anode layer 22 having a thickness of 40 µm.

In the corrosion test, each of the sample evaporators "a"-"c" is sprayed with simulated condensed water (i.e., highly corrosive aqueous solution) for a predetermined time and is dried for a predetermined time. The spraying process and the drying process were continued to be performed alternately. A maximum depth of corrosion of the tubes of each of the sample evaporators "a"-"c" was measured as time elapsed. The results are shown in FIG. 5.

As shown in FIG. 5, one of the tubes of the sample evaporator "a" was penetrated when elapsed time exceeded 800 hours. One of the tubes of the sample evaporator "b" was penetrated when elapsed time exceeded 1,000 hours. However, none of the tubes of the sample evaporator "c" was penetrated even when elapsed time exceeded 1,000 hours and further exceeded 1,800 hours, with a maximum depth of corrosion of the tubes remaining about 0.06 mm. Thus, according to the first embodiment, the tubes 2 are effectively protected from corrosion.

### (Second Embodiment)

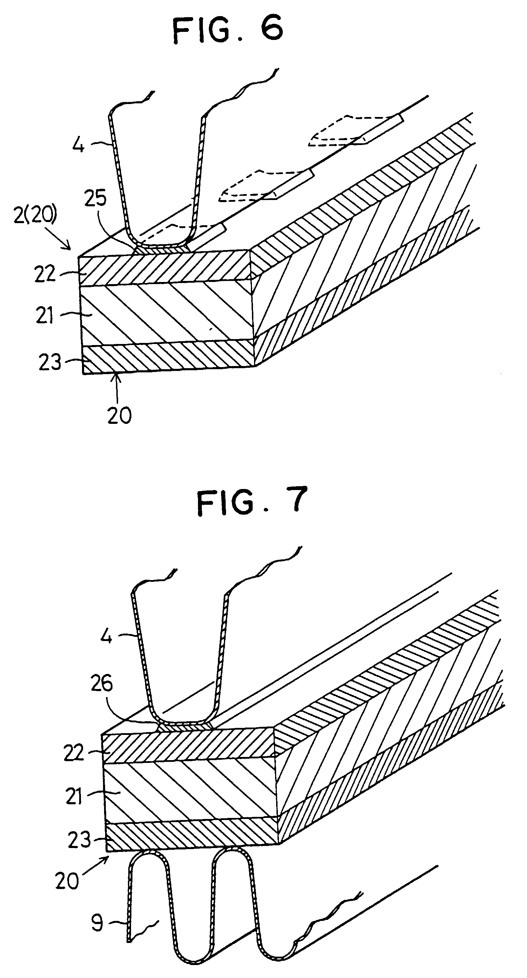

A second preferred embodiment of the present invention will be described with reference to FIG. 6. In this and following embodiments, components which are substantially the same as those in previous embodiments are assigned the same reference numerals.

In the first embodiment, although the brazing member 24 is necessary to braze each of the outer fins 4 to each of the tubes 2, the brazing member 24 may deteriorate corrosion resistance of the tubes 2. In the second embodiment, as shown in FIG. 6, a brazing member 25 is applied in stripes to a joint portion between the sacrifice anode layer 22 and each of the folds of each of the outer fins 4. The brazing member 25 is made of Al-Si alloy corresponding to "4045" or "4104". As a result, corrosion resistance of the tubes 2 is less affected by the brazing member 25.

### (Third Embodiment)

A third preferred embodiment of the present invention will be described with reference to FIG. 7. In the third embodiment, a brazing member 26 made of aluminum alloy corresponding to "4047" is applied in a straight line to a joint portion between the sacrifice anode layer 22 and each of the folds of each of the outer fins 4. "4047" corresponds to an aluminum alloy consisting of 12 % Si by weight and impurity, and is used for preplaced brazing or the like.

Further, an inner fin 9 is inserted into each of the refrigerant passages 3 formed in each of the tubes 2 for improving efficiency of heat transfer between refrigerant and air. Therefore, the inner fin 9 is disposed on the brazing layer 23. The inner fin 9 is made of aluminum alloy which may be the same as the material of the core 21 or different from the material of the core 21. The inner fin 9 is brazed to the tubes 2 by brazing material of the brazing layer 23. According to the third embodiment, the same effect as in the second embodiment is obtained.

### (Fourth Embodiment)

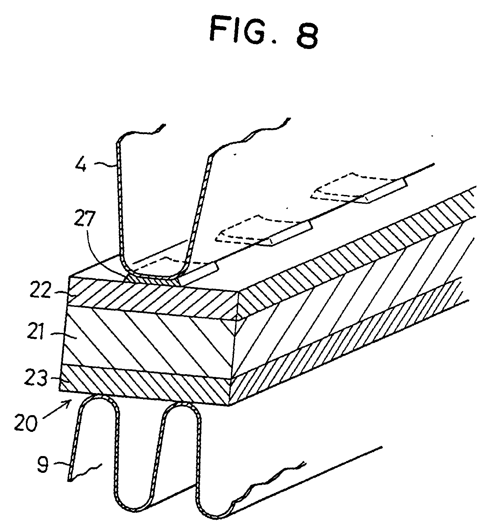

A fourth preferred embodiment of the present invention will be described with reference to FIG. 8. In the fourth embodiment, a brazing member 27 made of aluminum alloy corresponding to "4047" is applied in stripes to a joint portion between the sacrifice anode layer 22 and each of the folds of each of the outer fins 4. Further, the inner fin 9 is inserted into each of the refrigerant passages 3 formed in each of the tubes 2, similarly to the third embodiment. According to the fourth embodiment, the same effect as in the second embodiment is obtained.

### (Fifth Embodiment)

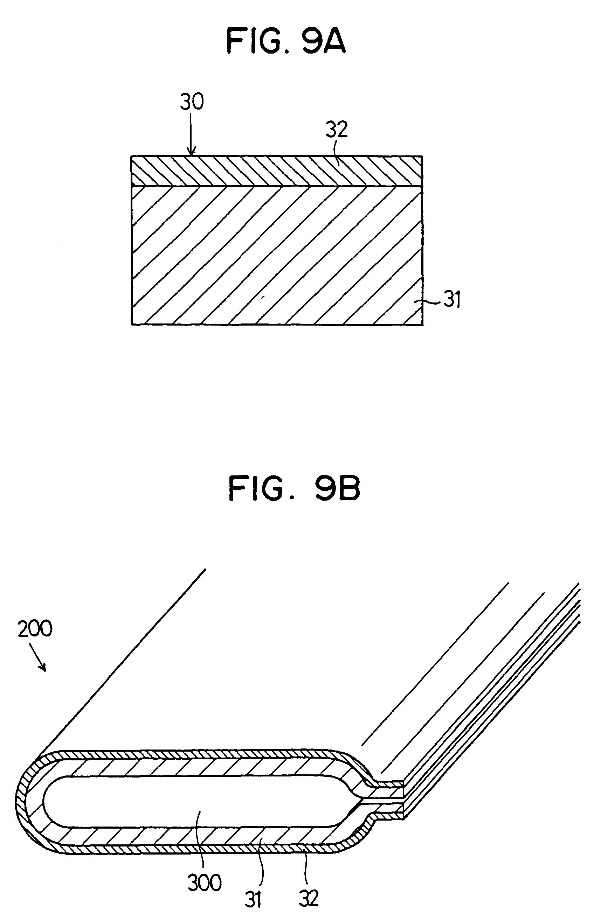

A fifth preferred embodiment of the present invention will be described with reference to FIGS. 9A-10. In the fifth embodiment, a work-hardened aluminum alloy plate 30 is formed by uniformly rolling a two-layer aluminum alloy plate in a roller mill. As shown in FIG. 9A, the two-layer aluminum alloy plate has a core 31 and a sacrifice anode layer 32 clad on one side surface of the core 31. Materials of the core 31 and the sacrifice anode layer 32 may be respectively same as those of the core 21 and the sacrifice anode layer 23 in the first embodiment.

Similarly to the first embodiment, after the two-layer aluminum alloy plate has been cold rolled at a rolling rate of approximately 70 %, the work-hardened aluminum alloy plate 30 is applied with heat treatment to have a distortion rate of about 10-20 %. Next, the work-hardened aluminum alloy plate 30 is set in a pressing device and is cut to have a predetermined size. Then, as shown in FIG. 9B, the work-hardened aluminum alloy plate 30 is formed into each of tubes 200 having a refrigerant passage 300 therein. The sacrifice anode layer 32 is disposed outside the tubes 200 to face air, and the core 31 is disposed inside the tubes 200 to face refrigerant.

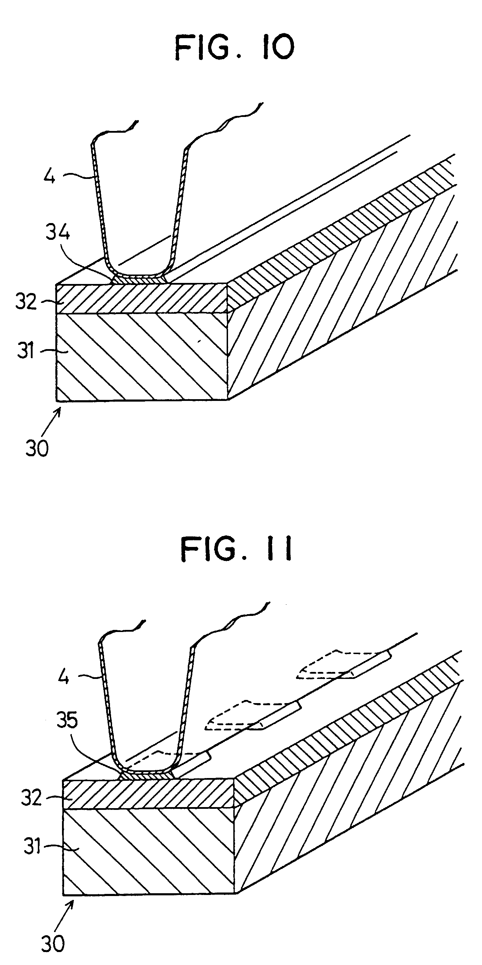

In the fifth embodiment, each end of the work-hardened aluminum alloy plate 30 is applied with brazing material (not shown) corresponding to "4047". Each end of the work-hardened aluminum alloy plate 30 is brazed together by the brazing material to form each of the tubes 200. Further, as shown in FIG. 10, a brazing member 34 is applied in a straight line to a joint portion between the sacrifice anode layer 32 and each of folds of each of the outer fins 4. The brazing member 34 is made of Al-Si alloy corresponding to "4045" or "4104".

### (Sixth Embodiment)

A sixth preferred embodiment of the present invention will be described with reference to FIG. 11. In the sixth embodiment, a brazing member 35 is applied in stripes to a joint portion between the sacrifice anode layer 32 and each of the folds of each of the outer fins 4. The brazing member 35 is made of Al-Si alloy corresponding to "4045" or "4104". As a result, the same effect as in the second embodiment is obtained.

### (Seventh Embodiment)

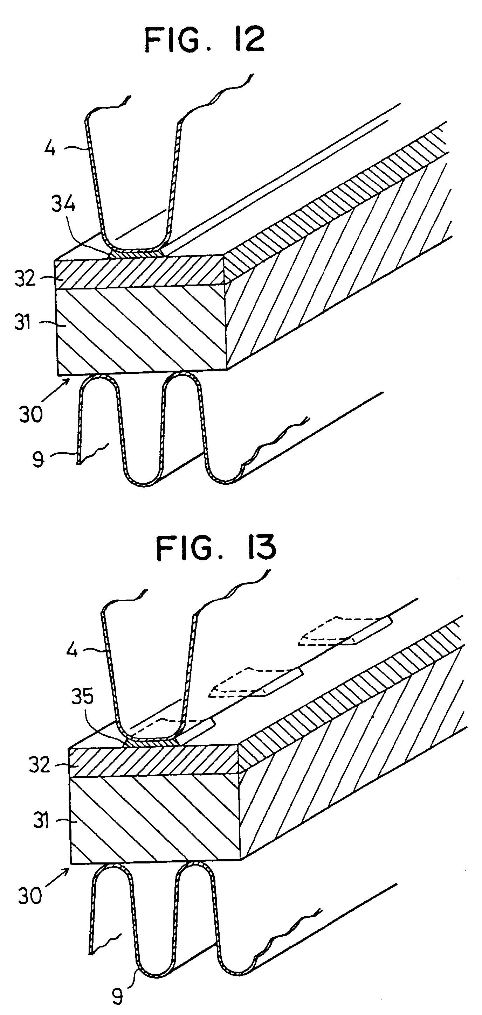

A seventh preferred embodiment of the present invention will be described with reference to FIG. 12. In the seventh embodiment, the brazing member 34 is applied in a straight line to a joint portion between the sacrifice anode layer 32 and each of the folds of each of the outer fins 4. Further, the inner fin 9 is inserted into each of the refrigerant passages 300 formed in each of the tubes 200 for improving efficiency of heat transfer between refrigerant and air. That is, the inner fin 9 is disposed on the core 31.

### (Eighth Embodiment)

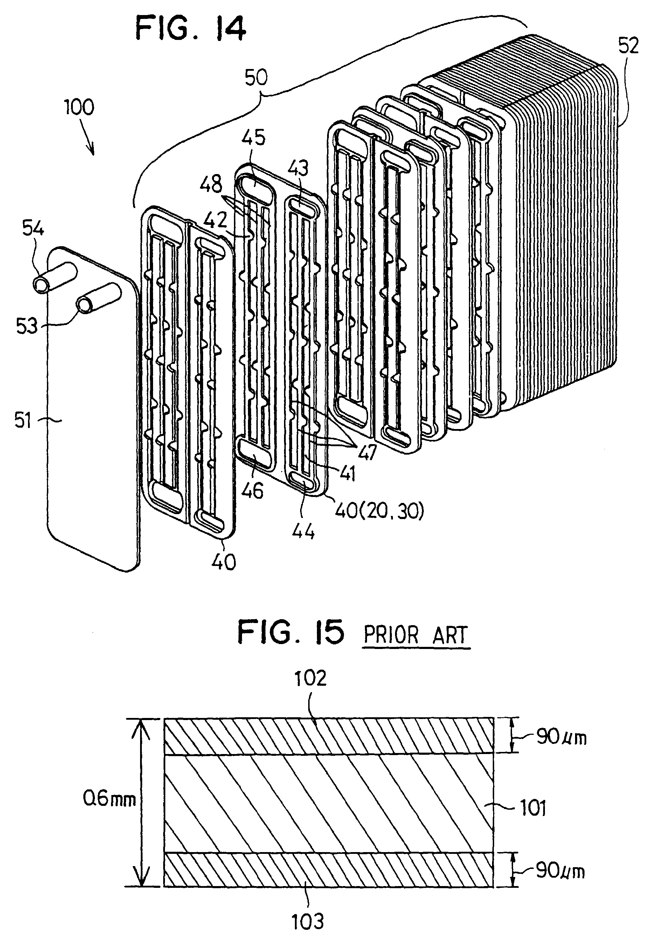

An eighth preferred embodiment of the present invention will be described with reference to FIG. 13. In the eighth embodiment, the brazing member 35 is applied in stripes to a joint portion between the sacrifice anode layer 32 and each of the folds of each of the outer fins 4. Further, the inner fin 9 is inserted into each of the refrigerant passages 300 similarly to the seventh embodiment.

### (Ninth Embodiment)

A ninth preferred embodiment of the present invention will be described with reference to FIG. 14.

As shown in FIG. 14, an evaporator 100 has a laminated body 50 formed by laminating plural refrigerant passage members and side plates 51, 52. Each of the side plates 51, 52 is respectively connected to end surfaces of the laminated body 50. Each of the passage members is made by connecting a pair of thin core plates 40 made of aluminum alloy. Each of the core plates 40 has a recessed refrigerant passage 41 and a recessed refrigerant passage 42. The pair of the core plates 40 are connected so that the recessed passages 41, 42 are disposed inside each of the passage members. Refrigerant is introduced into the recessed passage 41 from an inlet pipe 53 formed on the side plate 51. Refrigerant flowing through the recessed passage 42 is discharged from an outlet pipe 54 formed on the side plate 51. A size of the recessed passage 42 is larger than that of the recessed passage 41 in a direction in which air passes through the evaporator 100. Heat exchange between refrigerant flowing through the recessed passages 41, 42 and air passing through the evaporator 100 is performed so that refrigerant is evaporated and air is cooled.

Each of the core plates 40 has tank portions 43, 44 respectively formed at upper and lower ends of the recessed passage 41, and tank portions 45, 46 respectively formed at upper and lower ends of the recessed passage 42. Each of the tank portions 43-46 is an opening and communicates with a corresponding tank portion of adjacent passage members. Further, ribs 47, 48 are respectively formed in the recessed passages 41, 42. That is, the ribs 47, 48 are disposed at a refrigerant side of each of the core plates 40. The ribs 47, 48 function as reinforcing members for improving pressure resistance of each of the core plates 40 and as inner fins for improving efficiency of heat transfer between air and refrigerant at the refrigerant side of each of the core plates 40, that is, inside the evaporator 100. Further, the ribs 47, 48 function as outer fins for improving efficiency of heat transfer between air and refrigerant at an air side of each of the core plates 40, that is, outside the evaporator 100.

Next, a manufacturing method of the evaporator 100 will be described. First, each of the core plates 40 having the recessed passages 41, 42, the tank portions 43-46 and the ribs 47, 48 is integrally formed by shallow-drawing the work-hardened aluminum alloy plate 20 or 30 respectively according to the first or fifth embodiments. Each of the core plates 40 is formed so that the sacrifice anode layer 22 or 32 is disposed at the air side thereof, and the brazing layer 23 or the core 31 is disposed at the refrigerant side thereof.

Then, the plural core plates 40 are laminated to form the laminated body 50. The side plates 51, 52 are connected to the respective end of the laminated body 50 to form an assembled body. Thereafter, the assembled body is applied with flux powder so that the brazing layer 23 is uniformly wet, and is integrally brazed in a furnace. As a result, the evaporator 100 is formed.

Conventionally, a corrugated outer fin having a height of 8-10 mm is disposed between adjacent passage members. Therefore, a tank portion of a core plate needs to be formed by deep-drawing to have a height of 4-5 mm. However, according to the ninth embodiment, the laminated body 50 is formed by laminating only the core plates 40, and no outer fin is required to be disposed between adjacent passage members. Therefore, the tank portions 43-46 may be formed by shallow-drawing to have a height of 1 mm or the like. As a result, the evaporator 100 is formed only by shallow-drawing of the core plates 40. Therefore, a thickness of each of the core plates 40 can be decreased without causing crack, thereby reducing a size and a weight of the evaporator 100.

The present invention is not limited to an evaporator, and may be applied to any other heat exchangers made of aluminum alloy such as a condenser or a supercooler for a vehicle air conditioner, or an oil cooler for an engine cooler. When the present invention is applied to a heat exchanger for a refrigeration cycle such as a condenser or a supercooler, refrigerant is used as non-corrosive fluid and air is used as corrosive fluid, similarly to the evaporator 1. When the present invention is applied to an oil cooler, oil such as lubricant oil or operation oil is used as non-corrosive fluid and coolant or air is used as corrosive fluid.

Although the present invention has been fully described in connection with preferred embodiments thereof with reference to the accompanying drawings, it is to be noted that various changes and modifications will become apparent to those skilled in the art. Such changes and modifications are to be understood as being within the scope of the present invention as defined by the appended claims.

## Claims

1. A method of manufacturing a heat exchanger (100) integrally brazed, the method comprising steps of:
uniformly work-hardening a plurality of three-layer aluminum alloy plates to form a plurality of work-hardened plates (20), each of the three-layer aluminum alloy plates having a core (21) made of a first aluminum alloy including manganese, a sacrifice anode layer (22) clad on one side of the core (21) and made of a second aluminum alloy which is electro-chemically base with respect to the first aluminum alloy, and a brazing layer (23) clad on the other side of the core (21) and made of a brazing third aluminum alloy;
forming a fluid passage (41, 42) and a tank portion (43-46) on each of the plurality of work-hardened plates (20) by drawing so that the sacrifice anode layer (22) is disposed to face a corrosive fluid and the brazing layer (23) is disposed to face a non-corrosive fluid; and
laminating the plurality of work-hardened plates (40).

2. A method of manufacturing a heat exchanger (1) integrally brazed, the method comprising steps of:
uniformly work-hardening a three-layer aluminum alloy plate to form a work-hardened plate (20), the three-layer aluminum alloy plate having a core (21) made of a first aluminum alloy including manganese, a sacrifice anode layer (22) clad on one side of the core (21) and made of a second aluminum alloy which is electro-chemically base with respect to the first aluminum alloy, and a brazing layer (23) clad on the other side of the core (21) and made of a brazing third aluminum alloy; and
forming a tube (2) from the work-hardened plate (20) so that the sacrifice anode layer (22) is disposed to face a corrosive fluid and the brazing layer (23) is disposed to face a non-corrosive fluid.

3. The method according to claim 2, wherein the tube (2) is formed by bending.

4. A heat exchanger (1) comprising:
a core having a plurality of tubes (2) and a plurality of outer fins (4) made of a first aluminum alloy, the tubes (2) and the outer fins (4) being alternately laminated; and
a tank (5-7) separately formed from the tubes (2), the tank (5-7) into which one end of each of the tubes (2) is inserted, wherein:
each of the tubes (2) is produced by the following method:
uniformly work-hardening a three-layer aluminum alloy plate to form a work-hardened plate (20), the three-layer aluminum alloy plate having a core (21) made of a second aluminum alloy including manganese, a sacrifice anode layer (22) clad on one side of the core (21) and made of a third aluminum alloy which is electro-chemically base with respect to the second aluminum alloy, and a brazing layer (23) clad on the other side of the core (21) and made of a brazing fourth aluminum alloy; and
forming each of the tubes (2) by bending the work-hardened plate (20) so that the sacrifice anode layer (22) is disposed to face a corrosive fluid and the brazing layer (23) is disposed to face a non-corrosive fluid.

5. The heat exchanger (1) according to claim 4, wherein:
each of the outer fins (4) is corrugated to have a plurality of parallel folds, each of the folds having a flat top through which each of the outer fins (4) is joined to the tubes (2); and
a brazing material (24) is applied in a substantially straight line to a joint surface between the flat top and the tubes (2).

6. The heat exchanger (1) according to claim 4, wherein:
each of the outer fins (4) is corrugated to have a plurality of parallel folds, each of the folds having a flat top through which each of the outer fins (4) is joined to the tubes (2); and
a brazing material (25) is applied in stripes to a joint portion between the flat top and each of the tubes (2).

7. The heat exchanger (1) according to any one of claims 4-6, wherein an inner fin (9) is disposed inside each of the tubes (2).

8. A method of manufacturing a heat exchanger (100) integrally brazed, the method comprising steps of:
uniformly work-hardening a plurality of two-layer aluminum alloy plates to form a plurality of work-hardened plates (30), each of the two-layer aluminum alloy plates having a core (31) made of a first aluminum alloy including manganese and a sacrifice anode layer (32) clad on one side of the core (31) and made of a second aluminum alloy which is electro-chemically base with respect to the first aluminum alloy;
forming a fluid passage (41, 42) and a tank portion (43-46) on each of the plurality of work-hardened plates (30) by drawing so that the sacrifice anode layer (32) is disposed to face a corrosive fluid and the core (31) is disposed to face a non-corrosive fluid; and
laminating the plurality of the work-hardened plates (40).

9. The method according to claim 8, further comprising a step of:
applying a brazing material to the core (31) of each of the work-hardened plates (30).

10. A method of manufacturing a heat exchanger (1) integrally brazed, the method comprising steps of:
uniformly work-hardening a two-layer aluminum alloy plate to form a work-hardened plate (30), the two-layer aluminum alloy plate having a core (31) made of a first aluminum alloy including manganese and a sacrifice anode layer (32) clad on one side of the core (31) and made of a second aluminum alloy which is electro-chemically base with respect to the first aluminum alloy; and
forming a tube (200) by bending the work-hardened plate (30) so that the sacrifice anode layer (32) is disposed to face a corrosive fluid and the core (31) is disposed to face a non-corrosive fluid.

11. The method according to claim 10, further comprising a step of:
applying a brazing material to the core (31) of the work-hardened plate (30).

12. A heat exchanger (1) comprising:
a core having a plurality of tubes (200) and a plurality of outer fins (4) made of a first aluminum alloy, the tubes (200) and the outer fins (4) being alternately laminated; and
a tank (5-7) separately formed from the tubes (200), the tank (5-7) into which one end of each of the tubes (200) is inserted, wherein:
each of the tubes (200) is produced by the following method:
uniformly work-hardening a two-layer aluminum alloy plate to form a work-hardened plate (30), the two-layer aluminum alloy plate having a core (31) made of a second aluminum alloy including manganese and a sacrifice anode layer (32) clad on one side of the core (31) and made of a third aluminum alloy which is electro-chemically base with respect to the second aluminum alloy; and
forming a tube (200) by bending the work-hardened plate (30) so that the sacrifice anode layer (32) is disposed to face a corrosive fluid and the core (31) is disposed to face a non-corrosive fluid.

13. The heat exchanger (1) according to claim 12, wherein:
each of the outer fins (4) is corrugated to have a plurality of parallel folds, each of the folds having a flat top through which each of the outer fins (4) is joined to the tubes (200); and
a brazing material (34) is applied in a substantially straight line to a joint surface between the flat top and the tubes (200).

14. The heat exchanger (1) according to claim 12, wherein:
each of the outer fins (4) is corrugated to have a plurality of parallel folds, each of the folds having a flat top through which each of the outer fins (4) is joined to the tubes (200); and
a brazing material (35) is applied in stripes to a joint portion between the flat top and each of the tubes (200).

15. The heat exchanger (1) according to any one of claims 12-14, wherein an inner fin (9) is disposed inside each of the tubes (200).

16. The heat exchanger (1) according to any one of claims 4-6 and 12-14, wherein:
the non-corrosive fluid is a refrigerant; and
the core evaporates the refrigerant.

17. The heat exchanger (1) according to claim 16, wherein a thickness of each of the tubes (2, 200) is set to be in a range of 0.10-0.35 mm.

18. The method according to claim 2, wherein the forming step is performed while the work-hardened plate (20) has distortion.

19. The method according to claim 2, wherein the forming step is performed while the work-hardened plate (20) has a distortion rate of approximately 10-20 %.
